# EUROPEAN PATENT SPECIFICATION

(11) **EP 0 986 231 B1**
(45) Date of publication and mention of the grant of the patent: **27.07.2005**
(21) Application number: 99910753.5
(22) Date of filing: 29.03.1999
(51) Int. Cl.: H04L 29/14, H04J 3/00, G06F 9/445, H04L 12/56, G06F 11/14

(54) **SOFTWARE START-UP METHOD FOR A TRANSMITTER HAVING A PLURALITY OF REDUNDANCY SWITCHING FUNCTIONS**
VERFAHREN ZUR INITIALISIERUNG VON SOFTWARE FÜR SENDER MIT MEHREREN REDUNDANTEN SCHALTFUNKTIONEN
PROCEDE D'INITIALISATION DE LOGICIEL POUR UN EMETTEUR POSSEDANT PLUSIERS FONCTIONS DE COMMUTATION REDONDANTES

(30) Priority: 27.03.1998 JP 8082298
(43) Date of publication of application: 15.03.2000
(73) Proprietor: KABUSHIKI KAISHA TOSHIBA, Kawasaki-shi, Kanagawa-ken 210-8572 (JP)
(72) Inventor: BABA, Kenji, Kodaira-shi, Tokyo 187-0032 (JP)
(74) Representative: Granleese, Rhian Jane
(86) International application number: PCT/JP1999/001604
(87) International publication number: WO 1999/051004

(56) References cited:
- WO-A-93/00628
- GB-A- 1 481 108
- JP-A- 9 135 228
- JP-A- 9 233 157
- JP-A- 9 284 362
- US-A- 5 038 320
- PATENT ABSTRACTS OF JAPAN vol. 1998, no. 01, 30 January 1998 (1998-01-30) & JP 09 233157 A (OKI ELECTRIC IND CO LTD;NIPPON TELEGR & TELEPH CORP <NTT>), 5 September 1997 (1997-09-05)

## Description

### Technical Field

The present invention relates to a software start-up method for transmission apparatus for use in an information communication system according to, e.g. SDH (Synchronous Digital Hierarchy).

### Background Art

An example of an information communication system constituting a ring network conforming to SDH (Synchronous Digital Hierarchy) is one in which a plurality of nodes including transmission apparatuses are connected in a ring via a high-speed line. In the information communication system using the SDH system, an enormously wide band is utilized and various characteristic functions are provided. Among them is a function called APS (Automatic Protection Switch). This is stipulated in the ITU-T Recommendations G.841 and G783. Switching in a session-unit is implemented when a fault has occurred in a relay or a transmission medium in the transmission system. In order to implement the APS, a control unit of the transmission apparatus is provided with a plurality of redundancy switch functions (a high-speed line redundancy switch function, an intra-apparatus redundancy switch function, a low-speed line redundancy switch function, etc.).

In the conventional transmission apparatus, when software reset is executed due to the occurrence of a fault in the state in which redundancy switch is activated, the redundancy switch state is reset immediately after the start-up of the software and then the software reset is effected. More specifically, when software in an apparatus is reset in the state in which a fault has occurred in a transmission path or a transmission apparatus and traffic has been shifted off from a service system to a protection system, a process is executed to shift the traffic back to the service system in which a fault has occurred. Thus, the service traffic drops until an alarm acquisition process is reactivated after start-up of software. JP-A-09 233 157 als discloses initiating software of a transmission apparatus.

It is thus desired that even when software reset is effected in the state in which a plurality of redundancy switch functions are activated, the software reset process can be performed without shifting back the traffic which has been set onto the protection system. In addition, it is desired that data development processes of a plurality of redundancy switch functions can be arbitrated and that when the switch states of the plurality of redundancy switch functions are reset, no competition occurs and a software start-up process can be effected with the switch states maintained.

WO-A-9300628 discloses a software start-up method comprising arbitrating start-up processes and confirming completion of those processes and then issuing operation instructions for continuing start-up.

### Disclosure of the Invention

This invention providers a software start-up method as defined in Claim 1.

With the invention, even when software reset is executed in the state in which a plurality of switch functions are activated, software can be reset without temporarily shifting back a service traffic.

Data development processes of a plurality of redundancy switch functions can be arbitrated, and when the switch states of the plurality of redundancy switch functions are reset, no competition occurs and a software start-up process can be effected with the switch states maintained.

### Brief Description of Drawings

FIG. 1 shows an entire structure of an information communication system to which a transmission apparatus according to a first embodiment of the present invention is applied;
FIG. 2 shows a structure of an FFRN (Four Fiber Ring Node);
FIG. 3 is a view for describing redundancy of a transmission apparatus constituting a node;
FIG. 4 is a view for describing a span switch in an HSAPS;
FIG. 5 is a view for describing a ring switch in the HSAPS;
FIG. 6 shows a structure of the transmission apparatus according to the first embodiment of the invention;
FIG. 7 is a view for describing an intra-apparatus redundancy switch;
FIG. 8 is a view illustrating a start-up sequence according to the first embodiment of the invention;
FIG. 9 is a flow chart illustrating a processing procedure by a start-up sequence management section;
FIG. 10 is a flow chart illustrating a processing procedure by each redundancy switch function;
FIG. 11 is a view for describing a virtual main signal switch memory space according to a second embodiment of the invention;
FIG. 12 is a flow chart illustrating a processing procedure by a control module in the second embodiment of the invention;
FIG. 13 is a view for describing a process in a start-up sequence;
FIG. 14 is a view for describing a process after completion of back-up data development;
FIG. 15 is a view showing a sequence in a third embodiment of the invention;
FIG. 16 is a flow chart illustrating an operation in the third embodiment of the invention;
FIG. 17 is a view showing a sequence in a fourth embodiment of the invention;
FIG. 18 is a flow chart illustrating an operation in the fourth embodiment of the invention;
FIG. 19 is a circuit diagram for describing a circuit configuration according to a fifth embodiment of the invention;
FIG. 20A and FIG. 20B are views for illustrating an operation in the fifth embodiment of the invention;
FIG. 21A and FIG. 21B are views for illustrating the operation in the fifth embodiment of the invention;
FIG. 22 is a flow chart illustrating the operation in the fifth embodiment of the invention;
FIG. 23 is a flow chart illustrating the operation in the fifth embodiment of the invention;
FIG. 24 is a flow chart illustrating the operation in the fifth embodiment of the invention; and
FIG. 25 is a flow chart illustrating the operation in the fifth embodiment of the invention.

### Best Mode for Carrying Out the Invention

The best modes of carrying out the present invention will now be described with reference to the accompanying drawings.

### (First Embodiment)

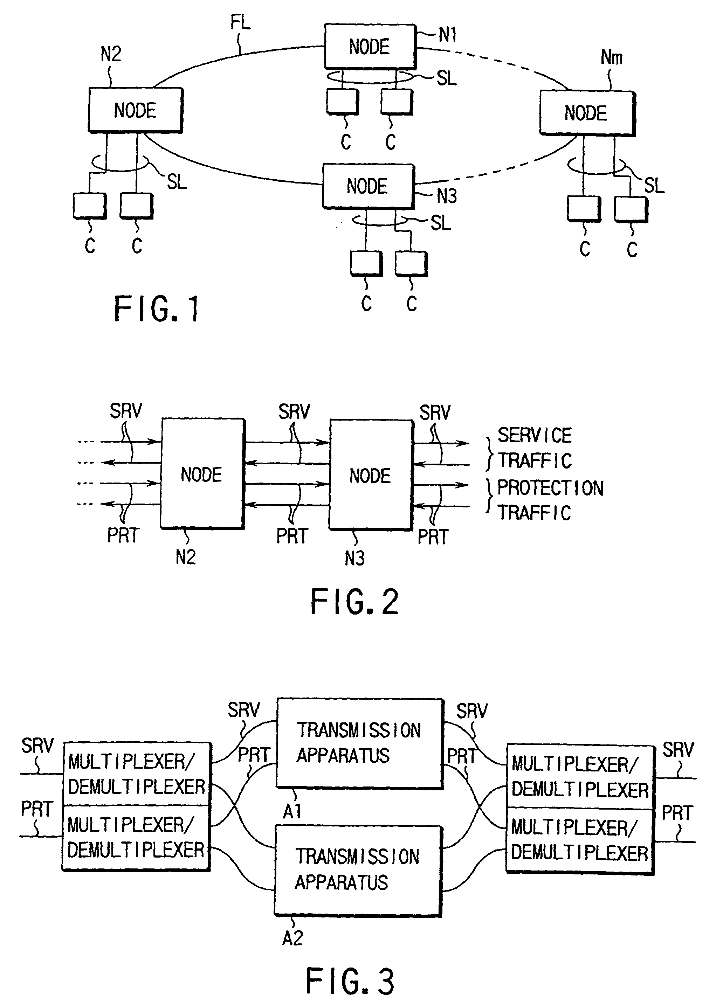

FIG. 1 shows an entire structure of an information communication system to which a transmission apparatus according to a first embodiment of the present invention is applied.

In this information communication system, a ring network according to SDH (Synchronous Digital Hierarchy) is constituted. An m-number of nodes (including a transmission apparatus) N1 to Nm are connected in a ring shape over a fast line FL. For the SDH, an optical transmission system is presupposed.
The SDH has various characteristic functions, making use of a very large band of the optical transmission system. Among such functions, there is one called APS (Automatic Protection Switch). The APS is stipulated in ITU-T Recommendation G.841 and G.783. This realizes switching in units of a section, in case of a fault in a relay or a transmission medium in the transmission system.

Adjacent nodes, as shown in FIG. 2, are connected by four fibers. Two of the four fibers are bi-directional service traffic (main-use system) fibers, and the other two are bi-directional protection traffic (auxiliary system) fibers. Each node thus constitutes an FFRN (Four Fiber Ring Node).

In this information communication system, the amount of data to be transmitted/received is very large. Thus, in many cases, as shown in FIG. 3, each node is constituted such that a plurality of transmission apparatuses A1 and A2 are connected in parallel to transmission paths via multiplexer/demultiplexer sections. The respective transmission apparatuses share various signal processing such as setting of lines. Accordingly, the transmission apparatuses A1 and A2 are operated, with frame synchronism established.

The service traffic fibers and protection traffic fibers serve as fast lines for transmitting digital signals which have frame structures standardized by SDH and are time-division multiplexed. The fast lines are constructed by, e.g. STM-16 standardized by SDH. Information of a given channel, chosen from all information transmitted through the fast lines FL, is dropped into low-speed lines (e.g. STM-1 standardized by SDH) by the transmission apparatuses at respective nodes N1 to Nm and delivered to communication apparatuses C such as exchanges.

In the ring network system having the above structure, in the state (hereinafter referred to as "normal state") in which no switching is effected due to detection of a fault or an external command, signals are transmitted among the nodes through the service traffic fibers. Each node monitors at all times the transmission states of both the service traffic fibers and protection traffic fibers.

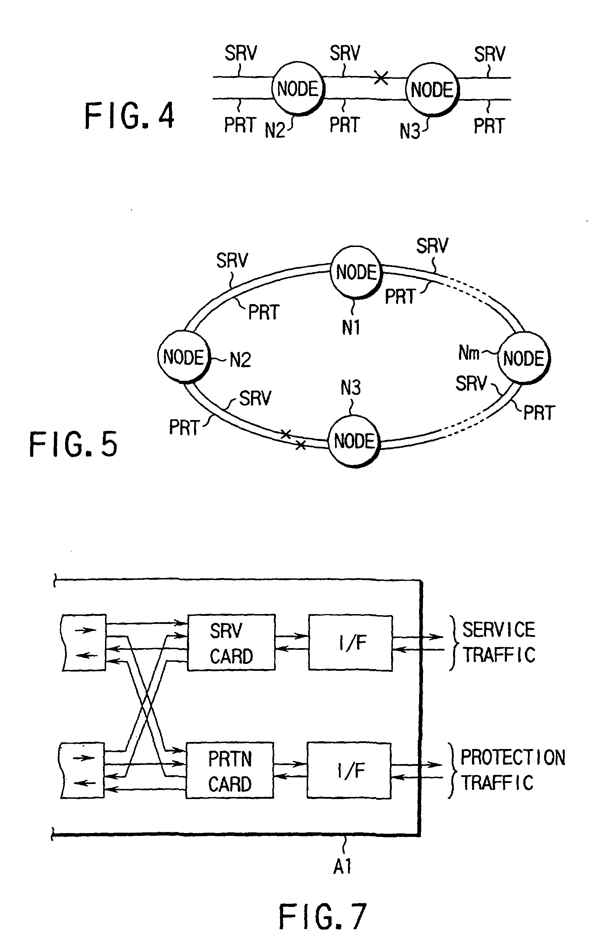

If a fault has occurred in a certain service traffic transmission system (e.g. between nodes N2 and N3), as shown in FIG. 4, the transmission path at that location is switched to the protection traffic fibers, thereby continuing communication ("span switch"). Needless to say, the span switch can forcibly be effected by an external command from a control apparatus (not shown), etc.

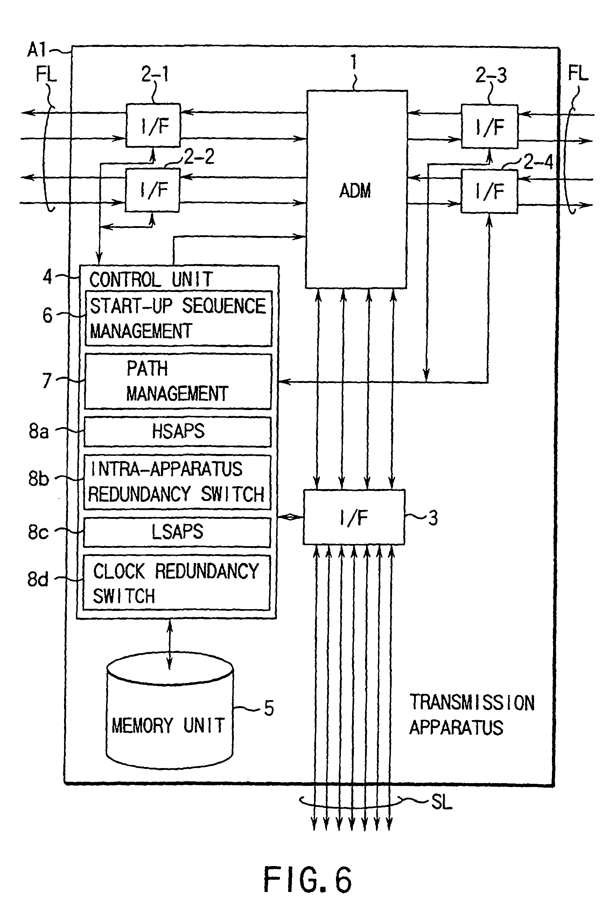

On the other hand, as shown in FIG. 5, if faults have occurred in both the service traffic fiber and protection traffic fiber between the nodes N2 and N3, the transmission path is switched to the protection traffic fiber of a transmission path which is different from the then used communication path, thereby continuing the communication ("ring switch"). Specifically, in this case, the substituted communication path runs in the order of node N2, node N1, node Nm and node N3. The ring switch, like the span switch, can forcibly be effected by an external command from a control apparatus (not shown), etc.

FIG. 6 shows a main structure of the transmission apparatus provided at each node, N1 to Nm.

Each transmission apparatus A1 has an add/drop multiplexer (ADM) 1. Sync transmission data transmitted through the fast lines FL is delivered to the add/drop multiplexer (ADM) 1 via interface sections (I/F) 21-1 to 2-4. Further, the data is dropped into slow lines SL via an interface section (I/F) 3. On the other hand, sync transmission data input from the slow line SL side is led into the add/drop multiplexer (ADM) 1 via the interface section 3 and multiplexed onto the fast lines FL.

The operation of the add/drop multiplexer (ADM) 1 is controlled by a control unit 4 on the basis of information delivered from the interface sections (I/F) 2-1 to 2-4.

The control unit 4 is implemented, for example, as a microcomputer, and it controls the entirety of the apparatus. The control unit 4 has the aforementioned APS function and performs controls relating to various redundancy switching. In addition, the control unit 4 stores data relating to various controls in a memory unit 5, which is a nonvolatile memory, and reads out data from the memory unit 5 on an as-needed basis.

The control unit 4 includes a start-up sequence management section 6, a path management function 7, an HSAPS (fast-line redundancy switch function) 8a, an intra-apparatus redundancy switch function 8b, an LSAPS (slow-line redundancy switch function) 8c and a clock redundancy switch function 8d. These are implemented in the form of application programs operated under, e.g. an operating system.

The start-up sequence management section 6 executes a start-up sequence of specified software when software reset has been effected due to occurrence of a fault, etc. The start-up sequence management section 6 sets in order the data development of various redundancy switch functions and mediates among the various redundancy switch functions, thereby implementing such resetting of switching states that the various redundancy switching functions may not interfere with each other.

The path management function 7 performs management such as setting of a communication path relating to its own apparatus and its periphery.

The HSAPS 8a is an APS function relating to redundancy switching (the above-described ring switch and span switch) of the fast lines. The HSAPS 8a enables, where necessary, transmission/reception among the nodes of control signals representing requests for the ring switch, etc. This is implemented by K-byte request signals (ITU-T Recommendation G.841) transmitted with use of 8-bit K1 byte and K2 byte set at a section overhead (SOH) of an SDH frame.

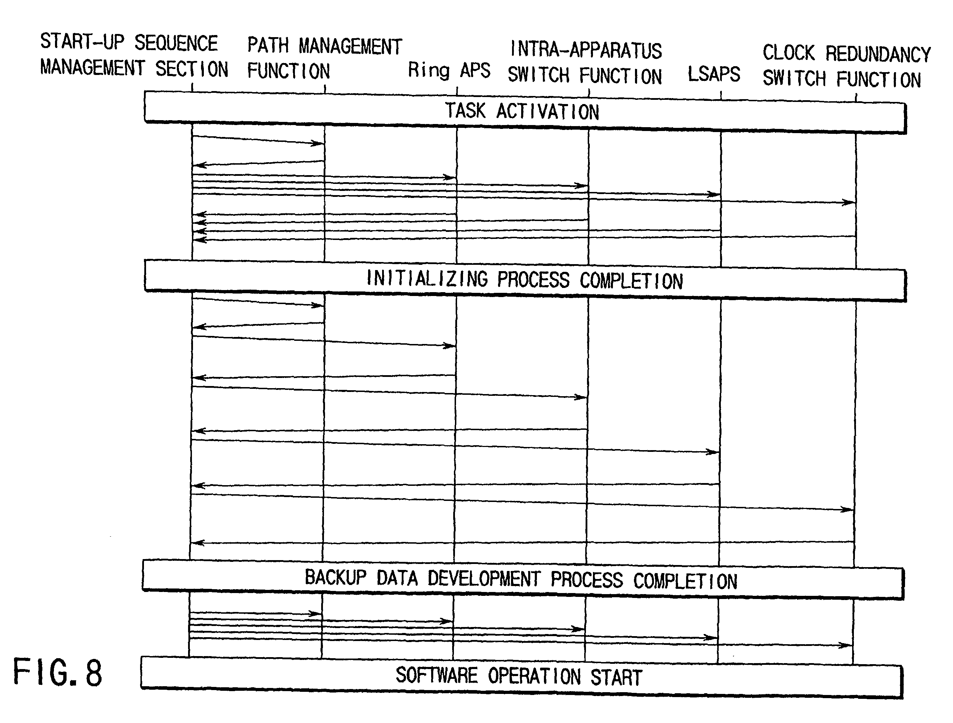

The intra-apparatus redundancy switch function 8b is an APS function relating to the redundancy switch of the lines in its own apparatus, which is provided with a service traffic I/F card and a protection traffic I/F card, as shown in FIG. 7. When a fault has occurred in the service traffic I/F card, the intra-apparatus redundancy switch function 8b substitutes the protection traffic I/F card. In this case, if the protection traffic is made effective in the fast lines, the intra-apparatus redundancy switch function 8b operates the switch in each card so that the protection traffic I/F card may be connected to the protection traffic fast lines.

The LSAPS 8c is an APS function relating to the redundancy switch of the slow lines. This apparatus, as shown in FIG. 6, is provided with an interface 3 for connecting the lines (service traffic and protection traffic) within the apparatus to a plurality of slow lines, and has a plurality of switch groups.

The intra-apparatus lines (service traffic and protection traffic) leading to the fast lines are connected to the slow lines (service traffic and protection traffic) via a plurality of switches. When a fault has occurred, the LSAPS 8c operates these switches and mediates between the service traffic and protection traffic. While the service traffic is used in the normal state, the non-used protection traffic can be used as part-time traffic in order to effectively use it.

The clock redundancy switch function 8d is an APS function relating to the redundancy switch of a reference clock used in the apparatus. This function effects clock redundancy switching between the present apparatus A1 and the other apparatus A2. A specific embodiment of the clock redundancy switch function will be described later.

Each of the various redundancy switch functions (including the HSAPS 8a, intra-apparatus redundancy switch function 8b, LSAPS 8c and clock redundancy switch function 8d as well as path management function 7) stores in the memory unit 5, as back-up data, the control data representing the switch states (or control states) of the main signal switch groups to be controlled by itself, at the time of starting the switch, etc.

In this embodiment, when the various redundancy switch functions develop back-up data during the execution of the start-up sequence of software mounted in the transmission apparatus, the start-up sequence management section 6 arbitrates the order of the development. Each switch function re-sets the control state, which is immediately before software reset, from the backup data saved in the memory unit (non-volatile memory). Even if software reset is executed in the state in which a plurality of redundancy switch functions are activated, the software reset process can be performed without restoring the service traffic shifted off to the protection system.

FIG. 8 shows a start-up sequence by the start-up sequence management section 6.

If software reset is executed in the state in which the redundancy switch is activated, each of the redundancy switch functions 7 and 8a to 8d stores its own redundancy switch state (control state) as backup data in the memory unit 5, and starts activation of a task.

After activating the task, each of the path management function 7 and various redundancy switch functions 8a to 8d executes a necessary initializing process, etc. in response to instructions sent from the sequence management section 6. In this case, basic data required by the redundancy switch functions 8a to 8d in the initializing process needs to be generated at first. Thus the sequence management section 6, which generates the basic data, enables the path management function 7 to first execute the initializing process, and then enables the redundancy switch functions 8a to 8d to execute the initializing processes in this order of priority.

If the path management function 7 and redundancy switch functions 8a to 8d have completed the initializing processes, they inform the start-up sequence management section 6 of the completion of process. At this stage, the preparation for developing the backup data is finished.

The start-up sequence management section 6 confirms the notices of completion of initializing processes from all the functions 7 and 8a to 8d. At this stage, the start-up sequence management section 6 shifts to the backup data development phase.

Subsequently, in order to maintain the switch state of, in particular, the redundancy switch function, the start-up sequence management section 6 successively instructs the path management function 7 and redundancy switch functions 8a to 8d to develop the backup data stored in the memory unit 5. In this case, too, basic data required by the redundancy switch functions 8a to 8d in the backup data development needs to be generated at first. Thus the sequence management section 6 preferentially enables the path management function 7, which generates the basic data, to execute the backup data development. A wait state continues until the development of the basic data is finished. After the basic data has been developed, the start-up sequence management section 6 instructs the redundancy switch functions 8a to 8d to execute the backup data development in this order of priority.

If the path management function 7 and redundancy switch functions 8a to 8d have completed the backup data development, they inform the start-up sequence management section 6 of the completion. At this stage, the preparation for developing the backup data is finished.

As will be described in detail in connection with the subsequent embodiments, when the aforementioned backup data development is performed, the path management function 7 and redundancy switch functions 8a to 8d access predetermined virtual main signal switch memory spaces. Regarding the memory spaces as main signal switches, they execute control data development. At the time the backup data of all functions have been reflected, the backup data of the redundancy switch functions may be developed.

The start-up sequence management section 6 confirms the notices of completion of backup data development from all the functions 7 and 8a to 8d. At this stage, the start-up sequence management section 6 sends instructions for running to the path management function 7 and redundancy switch functions 8a to 8d. Thus the running of the mounted software is started.

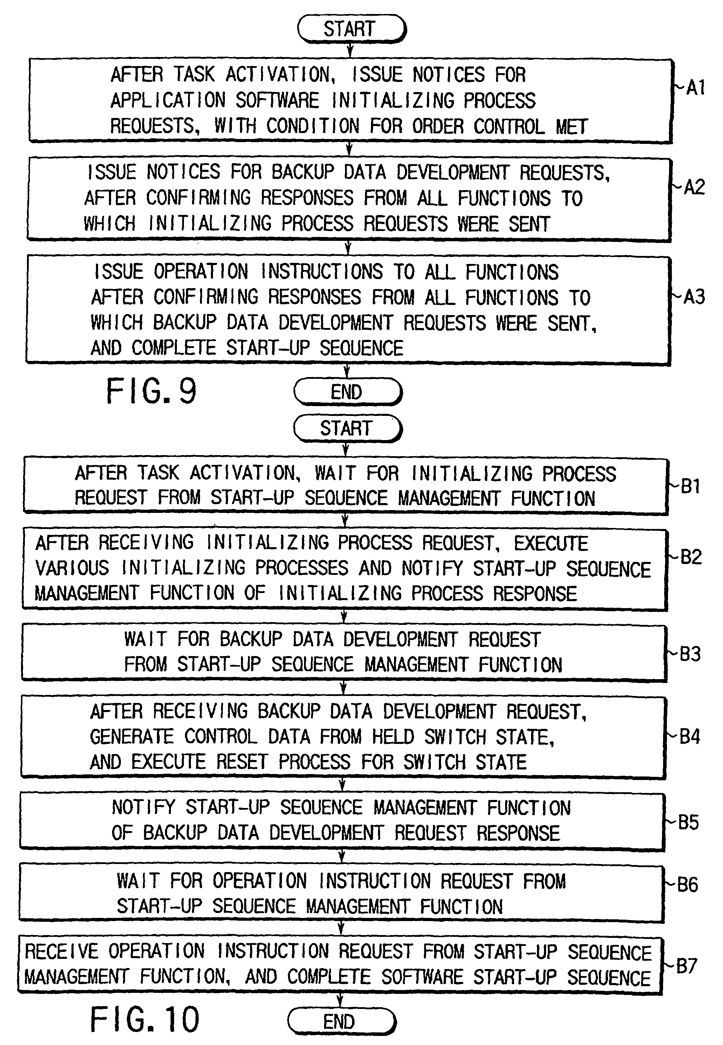

FIG. 9 is a flow chart illustrating a specific processing procedure by the start-up sequence management section 6.

After the tasks are activated, the start-up sequence management section 6 notifies the path management function 7 and redundancy switch functions 8a to 8d (application software) of the initializing process requests in the state in which the condition for order control is met (step A1). The order of this notification begins from the function for generating basic data for the initializing processes.

After confirming the responses from all functions to which the initializing process requests were sent, the start-up sequence management section 6 notifies the respective functions of backup development requests (step A2). This notification, too, requires an order control. The notification begins successively from the path management function 7 providing basic control data to the redundancy switch functions 8a to 8d.

After confirming the responses from all functions to which the backup data development requests were sent, the start-up sequence management section 6 sends instructions for running to all functions. Thus the start-up sequence is completed (step A3).

An additional description of the above-described process procedure will be given below.

Specifically, if the start-up sequence management section 6 is informed by the redundancy switch functions, or all functions managing necessary information for the operation of the redundancy switch function, that the state in which the backup data can be developed has been created, the start-up sequence management section 6 instructs the respective redundancy switch functions to develop the backup data in a desired order. The order for developing backup data begins, for example, from the path management function 7 serving as a base for redundancy switching. At the time the necessary information has been provided, the backup data development is started by the redundancy switch functions 8a to 8d. The efficiency is enhanced, for example, if the development process is started from the redundancy switch function having a large capacity of transmission signals to be processed.

FIG. 10 is a flow chart illustrating a specific processing procedure by each of the path management function 7 and redundancy switch functions 8a to 8d.

After activating the task, the redundancy switch function waits for the initialing process request from the start-up sequence management section 6 (step B1). After receiving the initializing process request, the redundancy switch function executes various initializing processes and notifies the start-up sequence management section 6 of a response indicative of the completion of initializing processes (step B2). The redundancy switch function then waits for a backup data development request from the start-up sequence management section 6 (step B3).

After receiving the backup data development request, the redundancy switch function generates control data from the maintained switch state and executes re-setting of the switch state (step B4). The redundancy switch function notifies the start-up sequence management section 6 of a response to the backup data development request (step B5) and then waits for an instruction for running from the start-up sequence management section 6 (step B6).

Once receiving the instruction for running from the start-up sequence management section 6, the redundancy switch function executes the running and completes the start-up sequence (step B7).

An additional description of the above-described process procedure will be given below.

Specifically, the redundancy switch function generates control data necessary for executing the redundancy switch, on the basis of information from the function for generating basic data such as the path management function 7. When the redundancy switch needs to be effected by the backup data stored in the memory unit 5, the redundancy switch function executes the development of the control data and notifies other functions of the execution of the redundancy switch control or reflects the execution of the redundancy on a table which can be referred to by other functions. According to the start-up sequence, at the time the backup data development of the first redundancy switch function has been completed, the backup data development of the next redundancy switch function is executed. In other words, where the software is reset in the state in which a plurality of redundancy switch functions are operated, the re-development of the switch states is executed successively by the respective redundancy switch functions in the start-up sequence. Moreover, the exclusiveness of the control points is ensured by the order control management of the start-up sequence.

As has been described above, according to the first embodiment, when the switch has been activated, the switch state is saved in the memory unit (non-volatile memory). When the software start-up sequence is started, the saved backup data on the switch state is developed and the state in which the service traffic is avoided is re-set during the start-up of software. Since the start-up sequence management section arbitrates the data development processes of various redundancy switch functions, the software can be started up with the switch states maintained, without competition in re-setting the switch states of the functions.

### (Second Embodiment)

A second embodiment of the invention relates to a preferred mode of the backup data development process in the first embodiment, and this preferred mode will be described in detail.

The elements common to those in the first embodiment will be denoted by like reference numerals and a detailed description thereof omitted. Characteristic portions will be mainly described.

In the second embodiment, when the backup data is developed by various redundancy switch functions in the start-up sequence of the software mounted in the transmission apparatus, direct operations of actual main signal switches may not be performed. For this purpose, virtual main signal switch memory spaces are provided in the memory unit 5, etc. Each of the started-up redundancy switch functions accesses the virtual main signal switch memory spaces. Thereby, the switch states of various redundancy switch functions can be written without affecting the actual line, and totally reflected on the actual main signal switches immediately before the start-up of the software. Thus, even when the software reset is executed in the state in which the plurality of redundancy switch functions are activated, the software reset process can be performed without restoring the service traffic shifted off to the protection system. This process is implemented by using a control module.

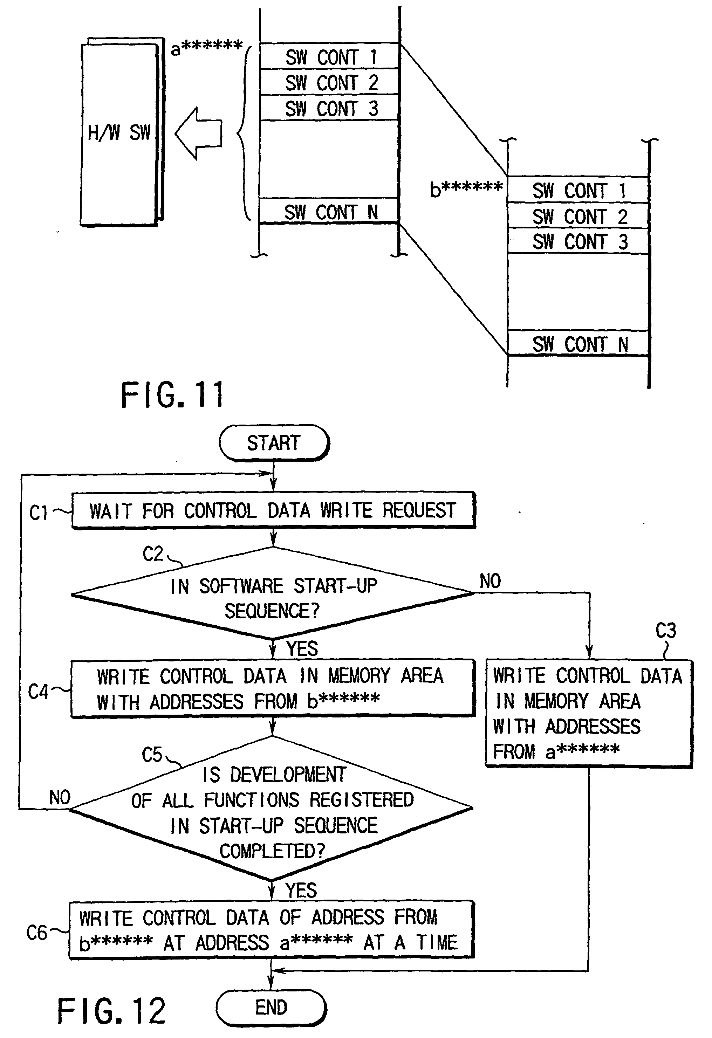

FIG. 11 is a view for describing the virtual main signal switch memory space according to the present embodiment.

As regards the redundancy switch executed during the running of the transmission apparatus, the actual physical main signal switch is defined on an area with addresses a******~. On the other hand, for the resetting of the switch state at the time of the start-up sequence activated by the software reset of the transmission apparatus, a work area is defined on a virtual main signal switch memory space having addresses b******~ and all the same structure as the main signal switch.

If control data is written in the area with addresses a******~, data is developed onto a memory space, for example, for hardware switch control.

FIG. 12 is a flow chart illustrating a process procedure by the control module for access to the main signal switch.

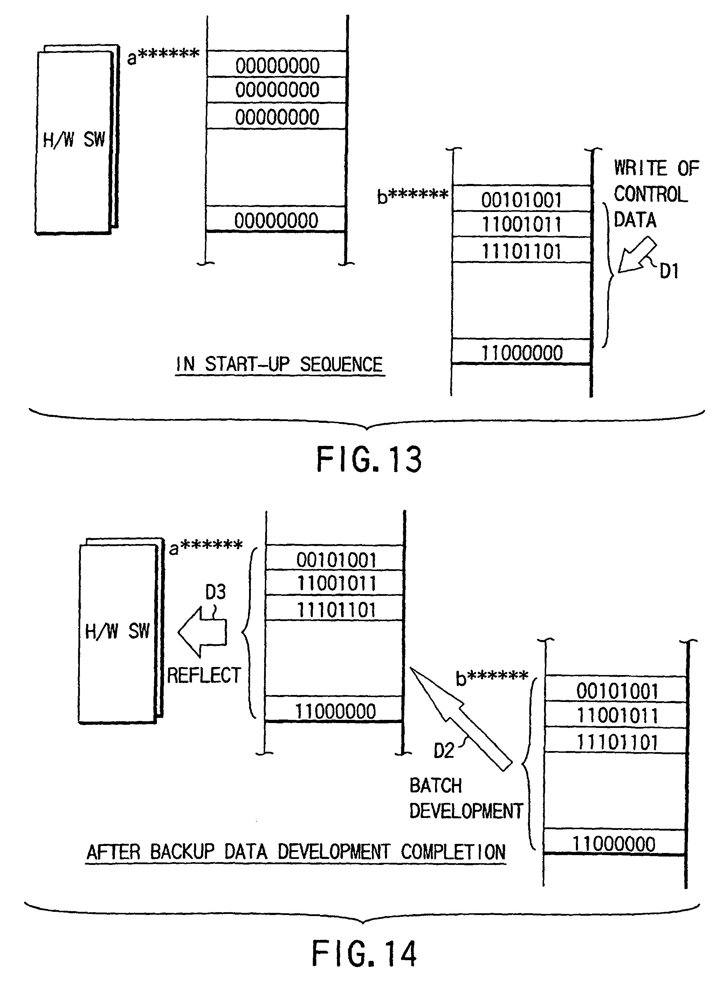

The control module is initially in the state for awaiting a control data write request (step C1). If the write request is sent, it is determined whether the software start-up sequence is being executed (step C2). If not, control data is written in the memory area with addresses a******~ (step C3) and the process is completed. On the other hand, if the start-up sequence is being executed, control data is written in the memory area with addresses b******~ (step C4). In FIG. 13, D1 indicates the content of this process on the memory area.

It is then determined whether the development for all functions registered on the start-up sequence has been completed (step C5). If not, the process from step C1 is repeated. On the other hand, if it has been completed, the control data written in the memory area with addresses b******~ is developed at a time onto the memory area with addresses a******~ (step C6). In FIG. 14, D2 indicates the content of this process on the memory area. Thereafter, as indicated by D3 in FIG. 14, a process is executed to reflect the control data written on the memory area on the hardware.

As has been described above, the process flows are different between the case where software is being run and the case where the start-up sequence is executed due to software rest.

An additional description of the above process procedure will be given below.

Specifically, the various main signal switches in the transmission apparatus keep the states immediately before the software reset, even while the software start-up sequence is being run. However, if the main signal switches are directly operated in the development of the backup data of the redundancy switch function executed during the start-up sequence, the control states immediately before the reset may be altered at the time of start-up of the software in the state in which the plurality of redundancy switch functions are being activated. In consideration of this, the virtual main signal switch memory space is accessed during the start-up sequence, and each redundancy switch function executes the control data development by regarding this memory space as the main signal switch. At the time the backup data of all functions has been reflected, the backup data of the redundancy switch functions is developed at a time.

In order to store the control data developed during the software start-up sequence, as shown in FIG. 13, the virtual main signal switch memory space is accessed. Each redundancy switch function successively writes control data in the virtual main signal switch memory space during the start-up sequence. In addition, where it is necessary to recognize the control states other redundancy switch functions, desired data is read out from this virtual main signal switch memory space.

After all redundancy switch functions have completed backup data development, the procedure for reflecting the control data on the physical main signal switches, as shown in FIG. 14, is started. In most cases, the control states immediately before the software reset are made to coincide with the control data on the virtual main signal switch memory space, that is, the control states are re-set. If a write fault has occurred at the stage of reflecting the control data on the virtual main signal switch memory space onto the physical switches, the redundancy switch function temporarily regards the backup data development as successful at the time the control data write to the virtual main signal switch memory space has been completed during the start-up sequence. However, whether the re-development of the redundancy switching is finally successful is determined on the basis of the result of the reflection of the control data in the virtual main signal switch memory space onto the physical main signal switches.

According to the second embodiment, as described above, the control data of each main signal switch, which has been developed from the backup data used by each switch function in the software start-up, is not directly developed to the main signal switch during the start-up, but is developed onto the imaginary main signal switch memory space. Immediately before the start-up of the software, the control data is developed onto the actual main signal switches at a time. Thereby, it is possible to reflect the state in which the switch states of a plurality of switch functions are coexisting. According to this operation, even if the software reset is executed in the state in which a plurality of switch functions are activated, resetting can be effected without shifting back the service traffic.

### (Third Embodiment)

A third embodiment of the invention, which will now be described, relates to an example in which the start-up sequence in the first embodiment is dispensed with.

The structural elements common to those in the first embodiment are denoted by like reference numerals, and a specific description thereof is omitted. Characteristic portions will mainly be described.

In the first embodiment, the start-up sequence is performed, up to such a stage that each redundancy switch function determines a control mode to protect the service line and the actual control data is developed on hardware.

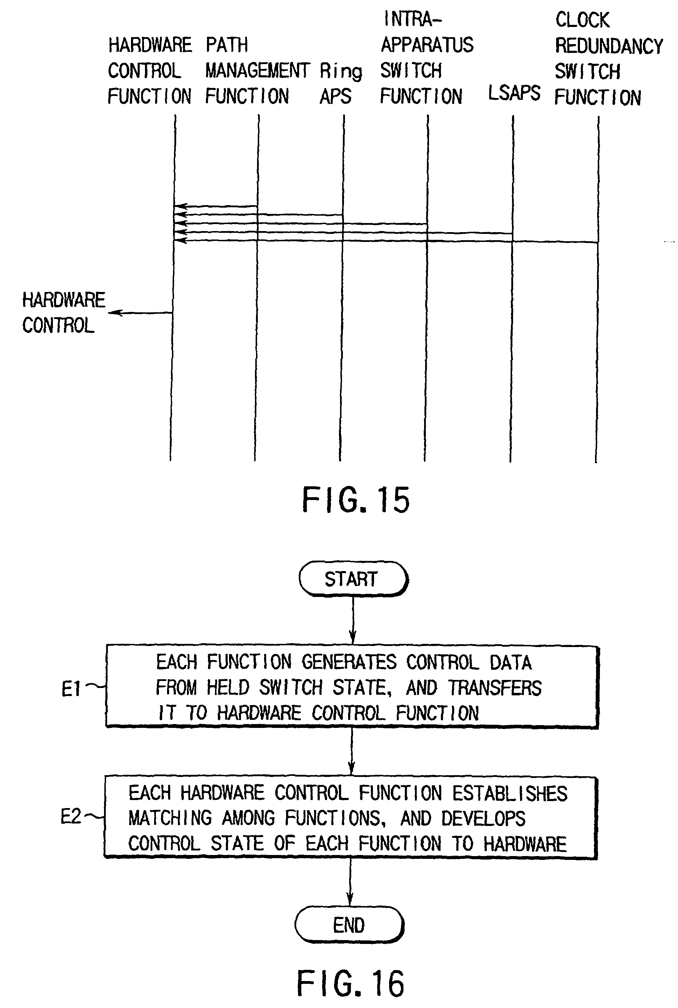

On the other hand, in the third embodiment, each redundancy switch function determines only the control mode. As regards the development of control data on hardware, a hardware control function is relied upon, as shown in FIG. 15. Accordingly, the hardware control function receives control data or a control data index delivered from each of the various redundancy switch functions, performs an exclusive operation for the respective redundancy switch functions, establishes matching, and develops control data onto hardware.

FIG. 16 illustrates a process procedure according to the third embodiment.

Each redundancy switch function generates control data from the held switch state, and delivers it to the hardware control function (step E1). On the other hand, the hardware control function performs an exclusive operation among the respective redundancy switch functions, establishes matching, and develops the control states onto hardware (step E2).

As has been described above, according to the third embodiment, the control states of a plurality of redundancy switch functions can be developed on the hardware control function side, and the sequence control is executed in this process. Therefore, the control for order in the start-up sequence management section is made needless.

### (Fourth Embodiment)

A fourth embodiment of the invention, which will now be described, also relates to an example in which the start-up sequence is made needless.

The structural elements common to those in the preceding embodiment are denoted by like reference numerals, and a specific description thereof is omitted. Characteristic portions will mainly be described.

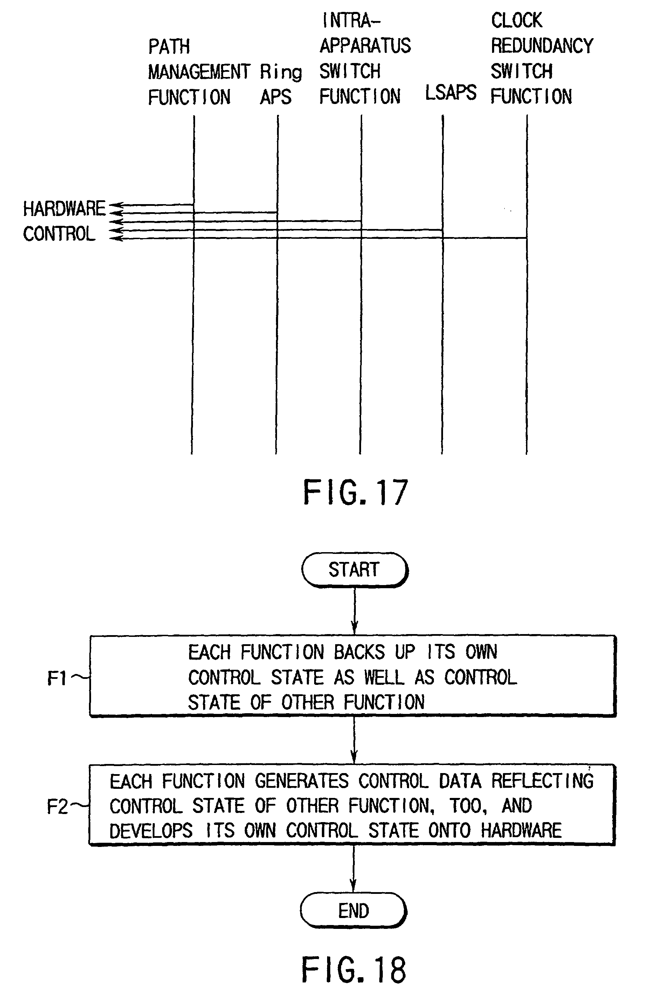

In the preceding third embodiment, each redundancy switch function entrusts the development of control data onto hardware to the hardware control function. On the other hand, in the fourth embodiment, as shown in FIG. 17, each redundancy switch function itself executes development to hardware.

FIG. 18 illustrates a process procedure according to the fourth embodiment.

Each redundancy switch function backs up data on its own control state as well as control states of other redundancy switch functions (step F1). Each redundancy switch function generates control data reflecting the control states of other redundancy switch functions, too, and develops its own control state onto hardware (step F2).

As has been described above, according to the fourth embodiment, each redundancy switch function is constructed in such a mode that it totally recognizes in what state the apparatus should be set. Accordingly, no mismatching occurs among the plurality of redundancy switch functions.

### (Fifth Embodiment)

A fifth embodiment of the invention, which will now be described in detail, relates to a desirable mode of the clock redundancy switch function in the above-described first embodiment.

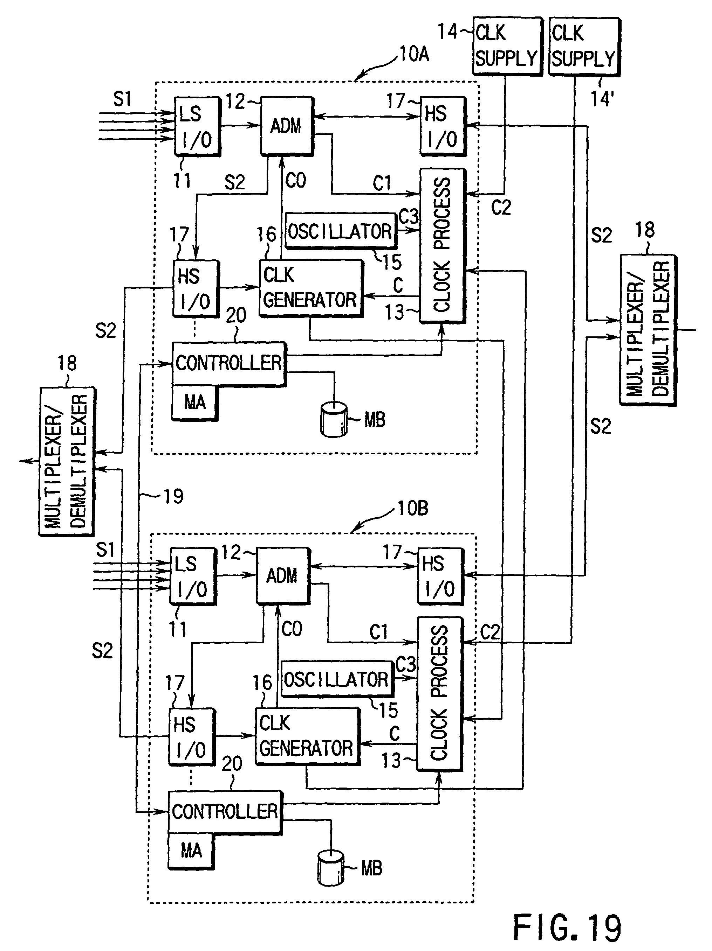

In this embodiment, a case where two transmission apparatuses operated in the same clock system is described by way of example with reference to FIG. 19. Reference numerals 10A and 10B denote transmission apparatuses, output signals from which are multiplexed with each other. The transmission apparatuses 10A and 10B have the same structure. Accordingly, the structure and operation of the transmission apparatus 10A will mainly be described. The structural elements in the transmission apparatus 10B, which are common to those in the transmission apparatus 10A, are denoted by like reference numerals, an overlapping description is partly omitted.

A low-speed side interface circuit 11, a signal processing section 12 and a high-speed side interface circuit 17 in the transmission apparatus shown in FIG. 19 constitute a main signal system and correspond to the low-speed side interface circuits 2-1, 2-2, ADM 1 and high-speed side interface circuits 2-3, 2-4 in the transmission apparatus shown in FIG. 6.

A control unit 20 and a backup memory MB in the transmission apparatus in FIG. 19 correspond to the control unit 4 and memory unit 5 in the transmission apparatus shown in FIG. 6.

A clock process section 13, an external clock supply device 14, an internal oscillator 15 and a clock generating section 16 in the transmission apparatus in FIG. 19 correspond to a clock system characterizing this embodiment.

In FIG. 19, low-speed side signals S1 are transmitted/received via the low-speed side interface circuit 11. The low-speed side signals S1 are sent to the signal process section 12. The signal process section 12 performs multiplexing/demultiplexing and predetermined processing for the low-speed side signals S1. The signal process section 12 generates a high-speed side signal S2 by using an internal clock C0 and sends it to the high-speed side interface 17. The high-speed side interface 17 amplifies the high-speed side signal S2 and sends it to a multiplexing device 18.

The multiplexing device 18 receives high-speed side signals S2 from the two transmission apparatuses 10A and 10B, multiplexes the high-speed side signals S2, and transmits/receives the multiplexed signal as a data signal to/from a data transmission communication apparatus in another region via a high-speed side transmission path (e.g. optical fiber cable).

In addition, the signal process section 12 extracts a clock C1. The extracted clock C1 is sent to the clock process section 13.

The clock process section 13 is supplied with a clock C2 from the external clock supply device 14, a clock C3 from the internal oscillator 15, and a clock C4 from the other transmission apparatus 10B.

The clock process section 13 has a function of receiving plural clocks from the outside, a function of selecting one of the input clocks, and a function of detecting an alarm indicative of abnormality such as breakage of clock with respect to the input plural clocks. Although the clock process section 13 is shown as one block, it may be shown as a plurality of blocks corresponding to the respective blocks.

The clock process section 13 selects one of the input plural clocks C1 to C4 on the basis of a priority, etc. The clock process section 13 delivers the selected clock to the clock generating section 16.

The clock generating section 16 generates the internal clock C0 on the basis of the clock C sent from the clock process section 13, supplies it to the signal process section 12, and also sends the clock signal C4 to the transmission apparatus 10B.

The transmission apparatus 10A, 10B is provided with a control unit CPU for controlling the clock process section 13, etc. A memory MA is included in the control unit CPU. The memory MA stores, e.g. control data for the transmission apparatus 10A associated with itself and the other transmission apparatus 10B which are currently being operated. The control unit CPU is connected to a backup memory MB for periodically backing up data developed on the memory MA. Read/write of the backup memory MB is controlled by the control circuit CPU.

The control unit CPUs of the transmission apparatuses 10A and 10B are connected by a monitor control communication line 19.

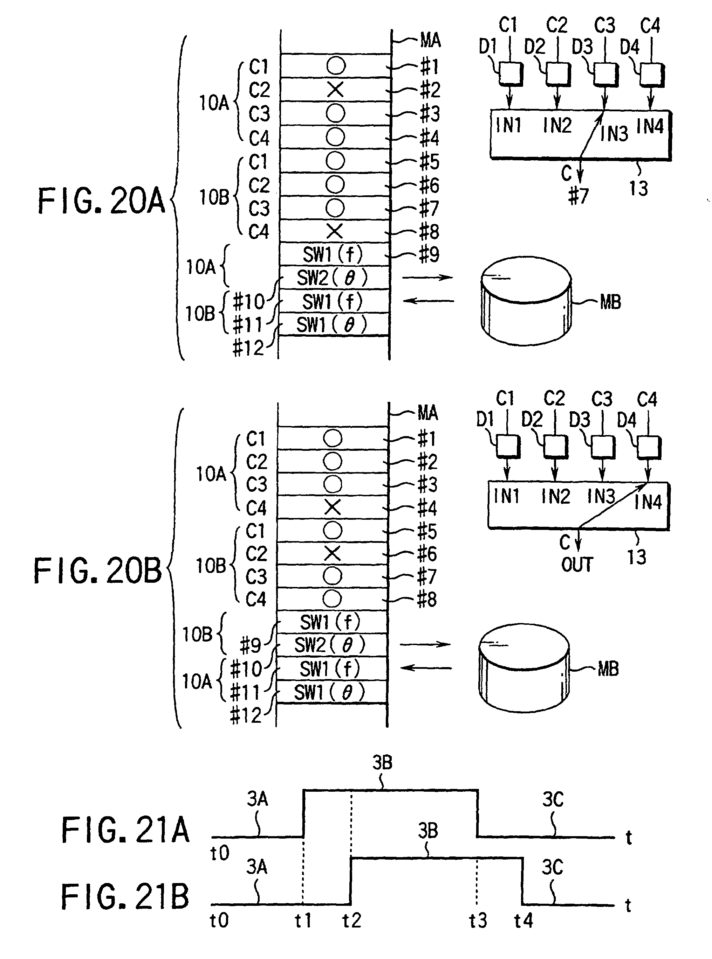

With reference to conceptual views of FIGS. 20A and 20B, a description will now be given of a control method whereby the control unit CPU controls the clock process section 13, and a method of managing data recorded in the memory MA and backup memory MB in association with the operation of the clock process section 13.

FIG. 20A shows the clock process section 13, memory MA and backup memory MB of the transmission apparatus 10A, and FIG. 20B shows the clock process section 13, memory MA and backup memory MB of the transmission apparatus 10B.

In FIG. 20A, input terminals IN1 to IN4 of the clock process section 13 are supplied with the clocks C1 to C4 via alarm detectors D1 to D4. One of the clocks is selected by the control of the control circuit CPU. The selected clock C is output from an output terminal OUT and sent to the clock generating section 16, as was described with reference to FIG. 19.

At this time, with respect to the clocks C1 to C4, the detection of an alarm indicative of abnormality such as breakage is performed by the alarm detectors D1 to D4. The presence/absence of alarm ("O" indicating the absence of alarm, and "X" indicating the presence of alarm; the same applicable to the following) is recorded in areas #1 to #4 in the memory MA. With respect to the clocks C1 to C4 input to the clock process section 13 of the other transmission apparatus 10B, the presence/absence of alarm is recorded in areas #5 to #8 in the memory MA.

Areas #9 and #10 in the memory MA store switch data SW1 and SW2 corresponding to the frequency f and phase θ of the internal clock C0. Areas #11 and #12 in the memory MA store switch data SW1 and SW2 corresponding to the frequency f and phase θ of the internal clock C0 in the other transmission apparatus 10B.

As is shown in FIG. 20B, the control method of the clock process section 13 and the management method of the memory MA and backup memory MB in the transmission apparatus 10B are the same as those in the transmission apparatus 10A.

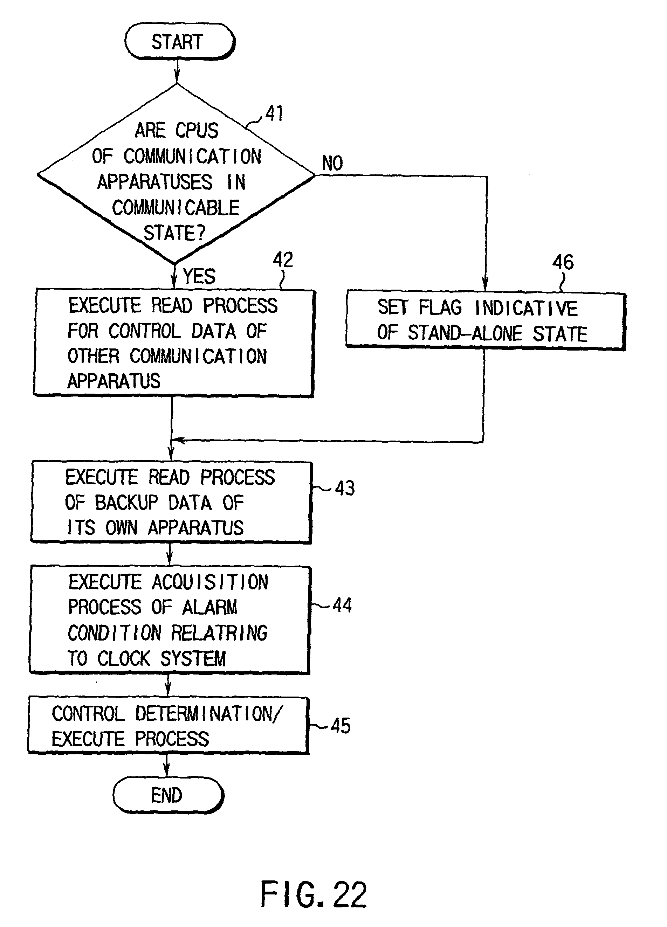

A sequence process for the switching start-up of the clock will now be described with reference to a flow chart of FIG. 22. Suppose that a fault has occurred in the transmission apparatus 10A, and the transmission apparatus 10B operates normally. A case where the transmission apparatus 10A is reset in this state will be described by way of example.

To start with, the control circuit CPU of transmission apparatus 10A determines whether the control circuit CPU of transmission apparatus 10B is in the communicable state (step 41).

FIGS. 21A and 21B show an example in which both transmission apparatuses 10A and 10B have performed start-up processes. As is shown in FIG. 21A, with the passing of time t, the transmission apparatus 10A, for example, shifts from an operative state 3A in which a transmission signal is sent, to a clock start-up state 3B and to an operative state 3C. During this time, on the other hand, the transmission apparatus 10B shifts from an operative state 3A to a start-up state 3B, with a time lag from the transmission apparatus 10A, as shown in FIG. 21B, and then to an operative state 3C. For example, in a time period t1-t2 in FIGS. 21A and 21B, the transmission apparatus 10B is in the operative state 3A and determined in the communicable state. When the transmission apparatus 10B is in the start-up state 3B, as in a time period t2-t3, it is determined in the non-communicable state.

If the communicable state has been determined in step 41, a control data read process for the transmission apparatus 10B is executed (step 42).

Then, a process for reading control data for the transmission apparatus 10A from backup data is executed (step 43). Thereafter, a process for acquiring an alarm on the clock system is executed (step 44), following which a control determination/execution process is executed (step 45).

If it is determined in step 41 that the control circuit CPUs in the transmission apparatuses 10A and 10B are non-communicable, a stand-alone flag is set, and a start-up sequence for the transmission apparatus 10A is controlled by backup data (step 46). Then the control flow goes to step 43.

According to the above flow, the clock switching start-up sequence process is completed.

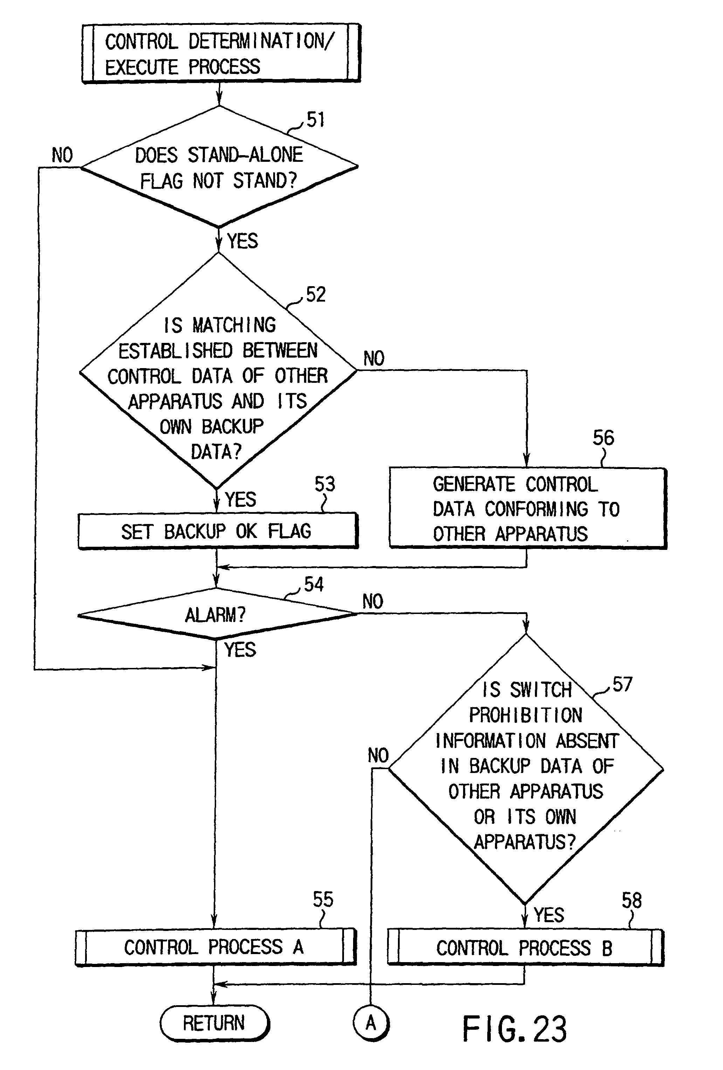

The control determination/execution process (step 45) in FIG. 22 will now be described with reference to a flow chart of FIG. 23.

It is first determined by a stand-alone flag whether the control circuit CPUs of the transmission apparatuses 10A and 10B are in the communicable state (step 51). If the stand-alone flag is not set and the communicable state is determined, matching between the control data of the transmission apparatus 10B and the read-in backup data of the transmission apparatus 10A is then determined (step 52). If it is determined that the control data of the transmission apparatus 10B coincides and matches with the backup data of the transmission apparatus 10A, a backup OK flag is set (step 53). It is then determined whether there is an alarm on the backup data (step 54). If there is no alarm, the control flow goes to a control process A of the transmission apparatus 10A (step 55).

If the stand-alone flag is set in step 51, the control goes to the control process A (step 55) of the transmission apparatus 10A.

If matching is not established in step 52, control data matching with the control data of the transmission apparatus 10B is generated (step 56). Then, the control goes to step 54 to determine the presence/absence of an alarm on the control data of the transmission apparatus 10B.

If the presence of an alarm is determined in step 54, the presence/absence of switch prohibition information for forcibly prohibiting the switch of clock selection is determined with respect to the backup data of the transmission apparatus 10A or the control data of the transmission apparatus 10B (step 57). If the switch prohibition information is absent, the control flow goes to a control process B for the transmission apparatus 10B (step 58).

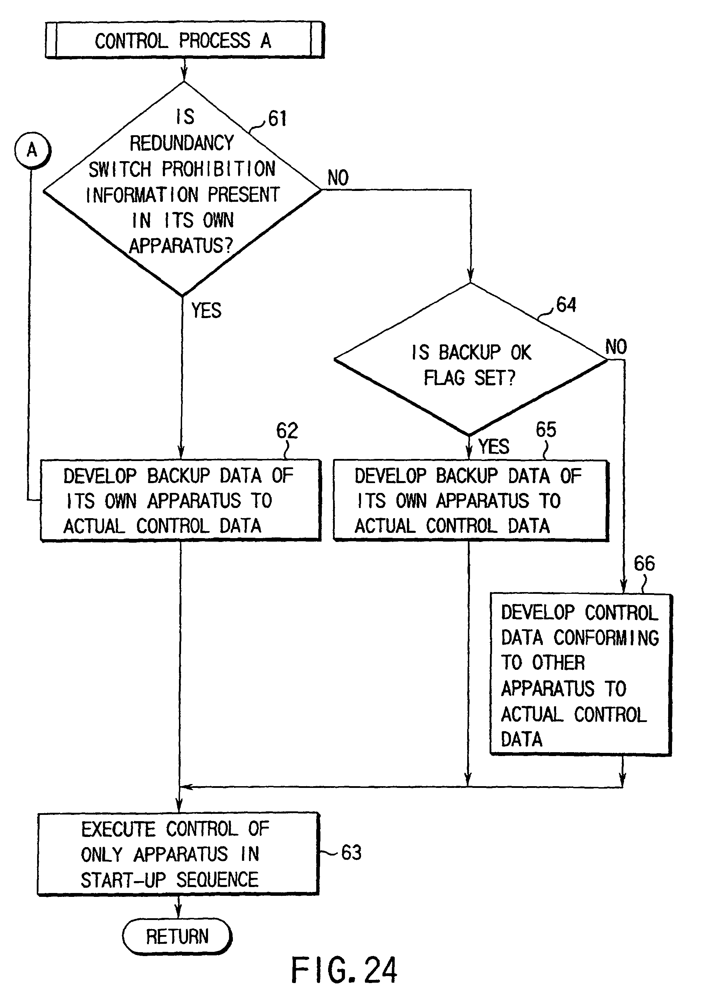

If the switch prohibition information is present in step 57, the control goes to one step (step 62 in FIG. 24) of the control process A for the transmission apparatus 10A.

In the above flow, when the control data of the transmission apparatuses 10A and 10B does not match, control data matching with the control data of transmission apparatus 10B is generated (step 56). The reason for this is that the control data of the transmission apparatus 10B is determined to be more reliable on the basis of the fact that the transmission apparatus 10A once halted the operation and then restarted the operation while the transmission apparatus 10B continues to operate.

The control process A of the transmission apparatus 10A will now be described with reference to FIG. 24.

It is first determined whether there is switch prohibition information in the transmission apparatus 10A (step 61). If there is switch prohibition information, the backup data is developed to actual control data (step 62). Then the start-up sequence control of the transmission apparatus 10A is executed (step 63).

If there is no switch prohibition information in step 61, it is then determined whether the backup OK flag is set (step 64). If the backup OK flag is set, the backup data is developed to actual control data (step 65). If the backup OK flag is not set, the control data of the transmission apparatus 10B is developed to actual control data (step 66). The start-up sequence control of the transmission apparatus 10A is executed by the actual control data developed in steps 65 and 66 (step 63).

If there is switch prohibition information in step 57 in FIG. 23, the control goes to step 62.

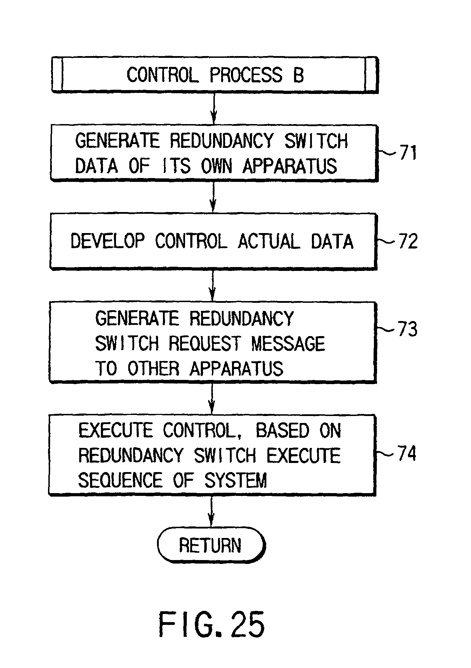

The control process B (step 58) of the transmission apparatus 10B in FIG. 23 will now be described with reference to FIG. 25. To begin with, control data for clock switch of the transmission apparatus 10A is generated (step 71). The generated control data is then developed to actual control data (step 72). Subsequently, a switch request message is generated to the transmission apparatus 10B (step 73). On the basis of a switch execution sequence provided in the system, a clock control for the transmission apparatus 10B is executed (step 74).

According to the above structure, in the clock-system switching and start-up sequence for one transmission apparatus, for example, a reference transmission apparatus, the backup data of the reference transmission apparatus and the control data of another transmission apparatus is acquired and processed. In addition, data on the presence/absence of an alarm is acquired and processed with respect to such backup data and control data. Further, the matching between the backup data of the reference transmission apparatus and the control data of the other transmission apparatus is determined, the presence/absence of the alarm is determined, and the switching of the clock system is executed and processed. Accordingly, in the clock system switching start-up sequence, the synchronous relationship in frequency and phase between the plurality of transmission apparatuses is not lost. Moreover, in the start-up sequence, an optimal state is determined for the state in which the system is situated and a control can be made.

In the above-described embodiment, the number of transmission apparatuses is two. However, the present invention is applicable to a case where the number of transmission apparatuses is three or more.

According to the fifth embodiment, as described above, there are provided a data transmission communication apparatus and a control method therefor wherein when the clock system is switched and started up, the synchronous relationship in clock between a plurality of transmission apparatuses is ensured and stable control states can be maintained.

The present invention is not limited to the above embodiments and various modifications can be made without departing from the invention.

### Industrial Applicability

According to the present invention, as described above, the start-up sequence management section provided in the control unit of the transmission apparatus arbitrates data development processes of various redundancy switch functions. Thus, when the switch states of the respective functions are re-set, no competition occurs and software start-up can be effected with the switch states maintained.

In addition, according to the present invention, the state in which the switch states of a plurality of switch functions are coexisting can be reflected. Even if software reset is executed in the state in which a plurality of switch functions are activated, the software can be re-set without temporarily shifting back the service traffic.

## Claims

1. A software start-up method for a transmission apparatus having a plurality of redundancy switch functions, the method comprising:
a step (A1) of giving an instruction regarding initialising processes in a predetermined order to the respective redundancy switch functions in a software start-up sequence;
a step (A2) of giving an instruction regarding backup data development processes in said predetermined order to the respective redundancy switch functions in response to initialising process completion notices from all the redundancy switch functions; and
a step (A3) of issuing operation instructions in said predetermined order to the respective redundancy switch functions in response to backup data development process completion notices from all the redundancy switch functions.

2. The software start-up method according to Claim 1, further comprising a step (D1) of writing backup data, which is developed by each of the plurality of redundancy switch functions, into a predetermined virtual memory space.

3. The software start-up method according to Claim 2, further comprising a step (D2) of confirming completion of all development processes of the plurality of redundancy switch functions, and writing data from the virtual memory space into an actual memory space.

4. The software start-up method according to Claim 1, wherein in the step (A2) of giving an instruction regarding the backup data development processes, a backup data development process is started from an associated redundancy switch function having a transmission amount of signals to be treated which amount is greater than any of those associated with the other backup data development processes.

## Patentansprüche

1. Verfahren zum Starten von Software für eine Übertragungsvorrichtung mit einer Vielzahl von Redundanzschalterfunktionen, wobei das Verfahren umfaßt:
einen Schritt (A1) zum Übergeben einer Anweisung in bezug auf Initialisierungsprozesse in einer vorbestimmten Reihenfolge an die jeweiligen Redundanzschalterfunktionen in einer Softwareinitialisierungsfolge;
einen Schritt (A2) zum Übergeben einer Anweisung in bezug auf Sicherungsdatenentwicklungsprozesse in der vorbestimmten Reihenfolge an die jeweiligen Redundanzschalterfunktionen als Antwort auf Mitteilungen zur Beendigung des Initialisierungsprozesses von allen Redundanzschalterfunktionen; und
einen Schritt (A3) zum Ausgeben von Operationsanweisungen in der vorbestimmten Reihenfolge an die jeweiligen Redundanzschalterfunktionen als Antwort auf Mitteilungen zur Beendigung des Sicherungsdatenentwicklungsprozesses von allen Redundanzschalterfunktionen.

2. Verfahren zum Starten von Software nach Anspruch 1, ferner mit einem Schritt (D1) zum Schreiben von Sicherungsdaten, die von jeder aus der Vielzahl von Redundanzschalterfunktionen entwickelt werden, in einen vorbestimmten virtuellen Speicherplatz.

3. Verfahren zum Starten von Software nach Anspruch 2, ferner mit einem Schritt (D2) zum Bestätigen der Beendigung aller Sicherungsdatenentwicklungsprozesse der Vielzahl von Redundanzschalterfunktionen und zum Schreiben von Daten aus dem virtuellen Speicherplatz in einen reellen Speicherplatz.

4. Verfahren zum Starten von Software nach Anspruch 1, wobei in dem Schritt (A2) zum Übergeben einer Anweisung in bezug auf die Sicherungsdatenentwicklungsprozesse ein Sicherungsdatenentwicklungsprozeß von einer zugeordneten Redundanzschalterfunktion mit einer zu behandelnden Übertragungssignalmenge gestartet wird, wobei diese Menge größer ist als irgendeine von denjenigen, die den anderen Sicherungsdatenentwicklungsprozessen zugeordnet sind.

## Revendications

1. Procédé de démarrage de logiciel pour un appareil de transmission ayant une pluralité de fonctions de commutation redondantes, le procédé comprenant :
une étape (A1) consistant à donner une instruction concernant des processus d'initialisation dans un ordre prédéterminé aux fonctions de commutation redondantes respectives dans une séquence de démarrage de logiciel ;
une étape (A2) consistant à donner une instruction concernant des processus de développement de données de sauvegarde dans ledit ordre prédéterminé aux fonctions de commutation redondantes respectives en réponse à des avis d'achèvement de processus d'initialisation provenant de toutes les fonctions de commutation redondantes ; et
une étape (A3) consistant à délivrer des instructions de fonctionnement dans ledit ordre prédéterminé aux fonctions de commutation redondantes respectives en réponse à des avis d'achèvement de processus de développement de données de sauvegarde provenant de toutes les fonctions de commutation redondantes.

2. Procédé de démarrage de logiciel selon la revendication 1, comprenant en outre une étape (D1) consistant à écrire des données de sauvegarde, qui sont développées par chacune de la pluralité de fonctions de commutation redondantes, dans un espace de mémoire virtuel prédéterminé.

3. Procédé de démarrage de logiciel selon la revendication 2, comprenant en outre une étape (D2) consistant à confirmer l'achèvement de tous les processus de développement de données de sauvegarde de la pluralité de fonctions de commutation redondantes, et à écrire des données de l'espace de mémoire virtuel dans un espace de mémoire réel.

4. Procédé de démarrage de logiciel selon la revendication 1, dans lequel dans l'étape (A2) consistant à donner une instruction concernant les processus de développement de données de sauvegarde, un processus de développement de données de sauvegarde est démarré à partir d'une fonction de commutation redondante associée comportant une quantité de transmission de signaux à traiter, cette quantité étant supérieure à celle associée aux autres processus de développement de données de sauvegarde.
